# EUROPEAN PATENT APPLICATION

(11) **EP 4 510 068 A1**
(43) Date of publication of application: **19.02.2025**
(21) Application number: 23315316.2
(22) Date of filing: 16.08.2023
(51) Int. Cl.: G06Q 40/04, G06Q 20/30, G06Q 20/38, G06F 9/50, G06Q 30/06, A63F 13/79

(54) **A DEVICE, SYSTEM, AND METHOD FOR CONTROLLING MEMORY USAGE ASSOCIATED WITH AN INTERMEDIATION ENGINE FOR A VIRTUAL PLATFORM**

(71) Applicant: Amadeus S.A.S., 06410 Biot (FR)
(72) Inventor: BOUDIA, Mourad, 06410 Biot (FR); HAUVILLER, Nicolas, 06410 Biot (FR); TEXIER, Rodolphe, 06410 Biot (FR); BEN ROMDHANNE, Bilel, 06410 Biot (FR); DONMEZ, Fatih, 06410 Biot (FR)
(74) Representative: Samson & Partner Patentanwälte mbB

(57) **Abstract**

A device, system and method for controlling memory usage associated with an intermediation engine for a virtual platform is provided. The engine determines that, within the platform, an exchange has occurred of a first data record for a first amount of a first electronic currency associated with the platform, the first data record associated with a computing device external to the platform. The engine: exchanges the first amount for a second data record associated with the platform; maintains, at a first memory, an indication of the second data record; exchanges, external to the platform, the indication of the second data record for a second amount of a second electronic currency used external to the platform; transfers, external to the platform, a portion of the second amount to a second memory associated with the computing device; and clears the first memory of the second data record indication.

## Description

### FIELD

The present specification relates generally to managing memory, and specifically to a device, system and method for controlling memory usage associated with an intermediation engine for a virtual platform.

### BACKGROUND

The explosion of virtual platforms have introduced enormous unresolved challenges in efficiently utilizing computing, processing, communication and memory resources. Addressing some of these challenges may lead to unprecedented usage of memory.

### SUMMARY

A first aspect of the present specification provides a method for interaction with a virtual platform, the method comprising: determining, via an intermediation engine, that an exchange has occurred within the virtual platform, the exchange being of a first data record for a first amount of a first electronic currency associated with the virtual platform, the first data record associated with a computing device external to the virtual platform, the exchange associated with a first account profile associated with the computing device; exchanging, via the intermediation engine, within the virtual platform, the first amount of the first electronic currency, for a second data record associated with the virtual platform; maintaining, via the intermediation engine, at a first memory, an indication of the second data record; exchanging via the intermediation engine, the indication of the second data record for a second amount of a second electronic currency used external to the virtual platform, the second amount received external to the virtual platform; transferring, via the intermediation engine, within the virtual platform, the second data record to a second account profile; transferring, via the intermediation engine, external to the virtual platform, at least a portion of the second amount to a second memory associated with the computing device; and in response to the transferring of the second data record to the second account profile, clearing, via the intermediation engine, the first memory of the indication of the second data record.

The method of the first aspect may further comprise: determining the second amount of the second electronic currency from the first amount of the first electronic currency based on an exchange rate between the second electronic currency and the first electronic currency. The method of the first aspect may further comprise: determining the exchange rate via a currency engine external to the intermediation engine and the virtual platform.

The method of the first aspect may further comprise: exchanging the second data record for the second amount of the second electronic currency after a given time period; and determining the given time period by estimating changes in an exchange rate between the second electronic currency and the first electronic currency. The method of the first aspect may further comprise: determining one or more of the given time period and the estimated changes in the exchange rate using one or more machine learning algorithms.

The method of the first aspect may further comprise: exchanging the second data record for the second amount of the second electronic currency based on a rule set associated with the computing device.

The method of the first aspect may further comprise: exchanging the second data record for the second amount of the second electronic currency after a given time period; and determining the given time period by estimating a demand for the second data record as a function of time.

The method of the first aspect may further comprise: monitoring a plurality of electronic currencies; and notifying the computing device of changes in one or more the plurality of currencies that affects exchange rates therebetween.

A first aspect of the present specification provides an intermediation engine for interaction with a virtual platform, the intermediation engine comprising: a controller; and a computer-readable storage medium having stored thereon program instructions that, when executed by the controller, causes the controller to perform a set of operations comprising: determining that an exchange has occurred within the virtual platform, the exchange being of a first data record for a first amount of a first electronic currency associated with the virtual platform, the first data record associated with a computing device external to the virtual platform, the exchange associated with a first account profile associated with the computing device; exchanging, within the virtual platform, the first amount of the first electronic currency, for a second data record associated with the virtual platform; maintaining, at a first memory, an indication of the second data record; exchanging the indication of the second data record for a second amount of a second electronic currency used external to the virtual platform, the second amount received external to the virtual platform; transferring, within the virtual platform, the second data record to a second account profile; transferring, external to the virtual platform, at least a portion of the second amount to a second memory associated with the computing device; and in response to the transferring of the second data record to the second account profile, clearing the first memory of the indication of the second data record.

At the intermediation engine of the second aspect, the set of operations may further comprise: determining the second amount of the second electronic currency from the first amount of the first electronic currency based on an exchange rate between the second electronic currency and the first electronic currency. At the intermediation engine of the second aspect, the set of operations may further comprise: determining the exchange rate , via a currency engine external to the intermediation engine and the virtual platform.

At the intermediation engine of the second aspect, the set of operations may further comprise: exchanging the second data record for the second amount of the second electronic currency after a given time period; and determining the given time period by estimating changes in an exchange rate between the second electronic currency and the first electronic currency. At the intermediation engine of the second aspect, the set of operations may further comprise: determining one or more of the given time period and the estimated changes in the exchange rate using one or more machine learning algorithms.

At the intermediation engine of the second aspect, the set of operations may further comprise: exchanging the second data record for the second amount of the second electronic currency based on a rule set associated with the computing device.

At the intermediation engine of the second aspect, the set of operations may further comprise: exchanging the second data record for the second amount of the second electronic currency after a given time period; and determining the given time period by estimating a demand for the second data record as a function of time.

At the intermediation engine of the second aspect, the set of operations may further comprise: monitoring a plurality of electronic currencies; and notifying the computing device of changes in one or more the plurality of currencies that affects exchange rates therebetween.

A third aspect of the present specification provides a non-transitory computer-readable storage medium having stored thereon program instructions that, when executed by a computing device, causes the computing device to perform a method comprising: determining that an exchange has occurred within the virtual platform, the exchange being of a first data record for a first amount of a first electronic currency associated with the virtual platform, the first data record associated with a computing device external to the virtual platform, the exchange associated with a first account profile associated with the computing device; exchanging within the virtual platform, the first amount of the first electronic currency, for a second data record associated with the virtual platform; maintaining at a first memory, an indication of the second data record; exchanging the indication of the second data record for a second amount of a second electronic currency used external to the virtual platform, the second amount received external to the virtual platform; transferring within the virtual platform, the second data record to a second account profile; transferring external to the virtual platform, at least a portion of the second amount to a second memory associated with the computing device; and in response to the transferring of the second data record to the second account profile, clearing the first memory of the indication of the second data record.

The method of the third aspect may further comprise: determining the second amount of the second electronic currency from the first amount of the first electronic currency based on an exchange rate between the second electronic currency and the first electronic currency. The method of the third aspect may further comprise: determining the exchange rate via a currency engine external to the computing device and the virtual platform.

The method of the third aspect may further comprise: exchanging the second data record for the second amount of the second electronic currency after a given time period; and determining the given time period by estimating changes in an exchange rate between the second electronic currency and the first electronic currency. The method of the third aspect may further comprise: determining one or more of the given time period and the estimated changes in the exchange rate using one or more machine learning algorithms.

The method of the third aspect may further comprise: exchanging the second data record for the second amount of the second electronic currency based on a rule set associated with the computing device.

The method of the third aspect may further comprise: exchanging the second data record for the second amount of the second electronic currency after a given time period; and determining the given time period by estimating a demand for the second data record as a function of time.

The method of the third aspect may further comprise: monitoring a plurality of electronic currencies; and notifying the computing device of changes in one or more the plurality of currencies that affects exchange rates therebetween.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for controlling memory usage associated with an intermediation engine for a virtual platform, according to non-limiting examples.
FIG. 2 depicts a computing device for controlling memory usage associated with an intermediation engine for a virtual platform, according to non-limiting examples.
FIG. 3 depicts a flowchart of a method for controlling memory usage associated with an intermediation engine for a virtual platform, according to non-limiting examples.
FIG. 4 depicts the system of FIG. 1 implementing aspects of a method for controlling memory usage associated with an intermediation engine for a virtual platform, according to non-limiting examples.
FIG. 5 depicts the system of FIG. 1 implementing further aspects of a method for controlling memory usage associated with an intermediation engine for a virtual platform, according to non-limiting examples.
FIG. 6 depicts the system of FIG. 1 implementing further aspects of a method for controlling memory usage associated with an intermediation engine for a virtual platform, according to non-limiting examples.
FIG. 7 depicts the system of FIG. 1 implementing further aspects of a method for controlling memory usage associated with an intermediation engine for a virtual platform, according to non-limiting examples.
FIG. 8 depicts the system of FIG. 1 implementing further aspects of a method for controlling memory usage associated with an intermediation engine for a virtual platform, according to non-limiting examples.
FIG. 9 depicts the system of FIG. 1 implementing further aspects of a method for controlling memory usage associated with an intermediation engine for a virtual platform, according to non-limiting examples.
FIG. 10 depicts the system of FIG. 1 implementing further aspects of a method for controlling memory usage associated with an intermediation engine for a virtual platform, according to non-limiting examples.
FIG. 11 depicts the system of FIG. 1 implementing further aspects of a method for controlling memory usage associated with an intermediation engine for a virtual platform, according to non-limiting examples.
FIG. 12 depicts the system of FIG. 1 implementing further aspects of a method for controlling memory usage associated with an intermediation engine for a virtual platform, according to non-limiting examples.

### DETAILED DESCRIPTION

Provided herein is a device, system and method for controlling memory usage associated with an intermediation engine for a virtual platform used to manage certain aspects of a virtual platform, for example on behalf of a computing device interacting with a virtual platform.

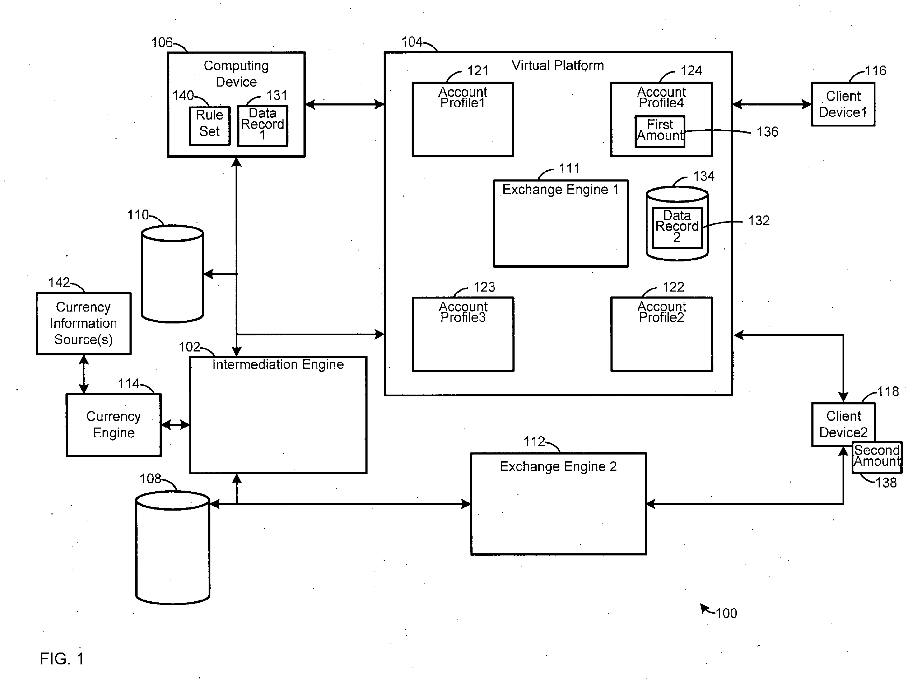

Fig. 1 shows a system 100 for controlling memory usage associated with an intermediation engine 102 for a virtual platform 104, the intermediation engine 102 used to manage certain aspects of the virtual platform 104, for example on behalf of a computing device 106 interacting with the virtual platform 104.

The system 100 will hence be described with respect to engines, such as the intermediation engine 102. As used herein, the term "engine" refers to hardware (e.g., a processor, such as a central processing unit (CPU), graphics processing unit (GPU), an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), a PAL (programmable array logic), a PLA (programmable logic array), a PLD (programmable logic device), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

The components of the system 100 are generally in communication via communication links which are depicted in FIG. 1, and throughout the present specification, as double-ended arrows between respective components. The communication links include any suitable combination of wireless and/or wired communication networks and, similarly, the communication links may include any suitable combination of wireless and/or wired links.

Hence, while as depicted the components of the system 100 are in communication via communication links therebetween, such communication links are understood to be implemented via a network, such as the Internet, and/or any other suitable combination of wired and/or wireless networks.

The system 100 comprises the intermediation engine 102, the virtual platform 104, the computing device 106, a first memory 108 associated with the intermediation engine 102, a second memory 110 associated with the computing device 106, a first exchange engine 111 that is a component of the virtual platform 104, a second exchange engine 112 external to the virtual platform 104, a currency engine 114 and two client devices 116, 118 (e.g., a first client device 116 and a second client device 118).

The intermediation engine 102 is in communication with the virtual platform 104, the computing device 106, the memories 108, 110 and the engines 112, 114.

The virtual platform 104 is in communication with the intermediation engine 102, the computing device 106, and the client devices 116, 118.

The computing device 106 is in communication with the intermediation engine 102, the virtual platform 104, and the second memory 110.

The second exchange engine 112 is in communication with the intermediation engine 102, the virtual platform 104, and the second client device 118.

The first client device 116 is in communication with the virtual platform 104.

The second client device 118 is in communication with the virtual platform 104 and the second exchange engine 112.

As will be presently explained, the first memory 108 is associated with, and/or maintained by, the intermediation engine 102, and the second memory 110 is associated with, and/or maintained by, the computing device 106; however the second memory 110 may be updated by the intermediation engine 102.

As depicted, the system 100 further comprises a first account profile 121, a second account profile 122, a third account profile 123, and a fourth account profile 124 respectively associated with the computing device 106, the second client device 118, the intermediation engine 102 and the first client device 124. While for simplicity the account profiles 121, 122, 123, 124 are depicted as being located at the virtual platform 104, the account profiles 121, 122, 123, 124 may be respectively located at, and/or maintained by, the computing device 106, the second client device 118, the intermediation engine 102 and the first client device 124.

As depicted, the virtual platform 104 implements the first exchange engine 111; put another way, the first exchange engine 111 is implemented internal to the virtual platform 104. In contrast, the second exchange engine 112 is implemented external to the virtual platform 104. In some examples, the second exchange engine 112 may be a component of a marketplace platform (e.g., which may be web-based and/or browser-based and/or may comprise a virtual platform similar to the virtual platform 104 but without certain technical limitations of the virtual platform 104 as described herein).

In particular, the exchange engines 111, 112 may be configured to implement exchanges of data records of the system 100, for certain amounts of electronic currencies. However, certain technical limitations may be placed on such exchanges, at least at the first exchange engine 111.

For example, as depicted, the computing device 106 comprises and/or generates and/or maintains a first data record 131. While the first data record 131 is depicted at the computing device 106, the first data record 131 may alternatively be stored at the second memory 110, and/or another memory (not depicted) associated with the computing device 106. Furthermore, as depicted, the virtual platform 104 comprises and/or generates and/or maintains a second data record 132 stored, for example, at a memory 134 of the virtual platform 104.

Furthermore, the memory 134 may store amounts of a first electronic currency associated with the virtual platform 104. While depicted as one memory, the memory 134 may comprise any suitable combination of memories for storing data records associated with the virtual platform 104 and amounts of a first electronic currency associated with the virtual platform 104.

The first exchange engine 111 may be used to exchange the data records, and/or indications thereof, internal to the virtual platform, for any suitable amount of a first electronic currency which is particular to the virtual platform 104. For example, many virtual platforms, including the virtual platform 104, provide their own specific electronic currencies, and exchanges within such virtual platforms may be restricted to using such specific electronic currencies. Furthermore, many of such virtual platforms, including the virtual platform 104, may restrict exchanging their own specific electronic currencies for other electronic currencies, whether inside or outside the virtual platforms. Put another way, a first electronic currency used by the virtual platform 104 may not be exchanged for another electronic currency, whether internal or external to the virtual platform 104.

Hence, a technical restriction on the first exchange engine 111, and an associated first electronic currency, is that exchanges implemented by the first exchange engine 111 must occur using the first electronic currency provided by the virtual platform 104 and the first electronic currency is restricted from leaving the virtual platform 104.

However, such restrictions may not prevent exchanges related to data records of the virtual platform 104, such as an indication of the second data record 132, from occurring external to the virtual platform 104. Furthermore, such restrictions may not prevent exchanges related to data records from sources external to the virtual platform 103, such as the first data record 132, from occurring using the first exchange engine 111.

In contrast, the second exchange engine 112 may be permitted to exchange data records and/or indications thereof, for any suitable amount of any suitable electronic currency (e.g., other than the first electronic currency associated with the virtual platform 104, or any other electronic currency associated with other virtual platforms that restrict external usage of their electronic currencies)

While the term electronic currency is used herein, the term electronic currency may be interchangeable with the term digital currency. Furthermore, such electronic and/or digital currencies may include, but is not limited to, block-chain based electronic and/or digital currencies, electronic and/or digital versions of national currencies, and the like.

Such a combination of restricted electronic activity and permitted electronic activity may enable the intermediation engine 102 to implement exchanges of data records in a manner that allows for the computing device 106 to implement an exchange of the first data record 131 within the virtual platform 104, via the first exchange engine 111, and later receive at least a portion of a second amount of a second electronic currency for the first data record 131 external to the virtual platform 104.

However, as will be explained herein, such functionality of the intermediation engine 102 is performed using the first memory 108, and hence may lead to inefficient usage of the first memory 108 unless controlled as described herein.

Prior to discussing such management, the components of the system 100 are described in more detail.

The intermediation engine 102 may comprise any suitable combination of any suitable number of one number of one or more servers, one or more cloud computing devices, and the like, and the intermediation engine 102 may be implemented accordingly, including, but not limited to a virtual machine implementation. Furthermore, the intermediation engine 102 may be associated with, and/or operated by, an entity that is different from respective entities associated with, and/or which operate, the virtual platform 104 and the computing device 106.

The virtual platform 104 may be based on any present or future electronic media servers that publish and/or provide content for the client devices 116, 118. In particular, the virtual platform 104 may comprise an augmented reality and/or virtual reality platform which may provide augmented reality and/or virtual reality environments, such as "metaverse" environments. Some example environments that the virtual platform 104 may implement may include, but are not limited to, a virtual game environment, a virtual social media environment, a virtual marketplace environment, amongst other possibilities.

In particular, in some examples, the intermediation engine 102, the computing device 106, and the client devices 116, 118 may be represented in a virtual environment of the virtual platform 104 as respective avatars. The term avatar, as used herein, may refer to any two-dimensional and/or three-dimensional representation of a respective user and/or entity in a virtual environment of the virtual platform 104. The client devices 116, 118, may be operated by respective users to control their respective avatars to interact with content of the virtual environment provided by the virtual platform 104. However, avatars representing the intermediation engine 102 and the computing device 106 may be respectively operated by the intermediation engine 102 and the computing device 106 to interact with content of the virtual environment provided by the virtual platform 104; for example, such avatars may represent "bots" and the like in the virtual environment provided by the virtual platform 104, and not human users. Nonetheless, one or more of the avatars representing the client devices 116, 118, may also represent "bots" and the like.

Alternatively, and/or in addition, the intermediation engine 102 and/or the computing device 106 may be represented at the virtual platform 104 as respective virtual stores, and the like.

Regardless, interactions of avatars, and the like, with the virtual environment provided by the virtual platform 104 may include providing data records for exchanges, such as the first data record 131, and providing amounts of the first electronic currency for such exchanges.

The virtual platform 104 may further implement a scene rendering engine (not depicted), which may render scenes of the virtual environment provided by the virtual platform 104, which may comprise a two-dimensional and/or three-dimensional environment, including, but not limited to, any suitable content, the aforementioned avatars, the aforementioned virtual stores, representations of data records and/or amounts of the first electronic currency, and the like. Such scenes may be provided to a client device 116, 118 and may be two-dimensional or three-dimensional, and depending on respective capabilities of a client device 116, 118 for which the scenes are being rendered. In some examples, however, such scenes may be primarily and/or only aural using, for example descriptive video to explain non-depicted visual aspects of a scene (e.g., for visually impaired users).

Furthermore, while only one virtual platform 104 is depicted, the system 100 may comprise any suitable number of virtual platforms, including tens, hundreds, thousands of virtual platforms, and/or any suitable number.

The computing device 106 may comprise any suitable combination of any suitable number of one number of one or more servers, one or more cloud computing devices, and the like. Furthermore, while only one computing device 106 is depicted, the system 100 may comprise any suitable number of computing devices, including tens, hundreds, thousands of computing devices, and/or any suitable number. Furthermore, the computing device 106 may be associated with, and/or operated by, an entity that is different from respective entities associated with, and/or which operate, the virtual platform 104 and the intermediation engine 102.

The memories 108, 110 may be based on any suitable memory structure, including, but not limited to, a database structure (e.g., as depicted) and may each comprise any suitable combination of one or more memories and/or one or more databases.

The second exchange engine 112 may comprise any suitable combination of any suitable number of one number of one or more servers, one or more cloud computing devices, and the like. Furthermore, while only second exchange engine 112 is depicted, the system 100 may comprise any suitable number of computing devices, including tens, hundreds, thousands of exchange engines external to the virtual environment 104, and/or any suitable number. Furthermore, the second exchange engine 112 may be associated with an entity associated with the intermediation engine 102, or another entity.

The client devices 116, 118 may comprise any suitable type of human-machine interface for interacting with the virtual platform 104. For example, the client devices 116, 118 may include traditional laptop computers, desktop computers, mobile phones, tablet computers and any other device that may be used to receive content via the virtual platform 104 that complement the input components and output components associated with a given client device 110. It is contemplated that the client devices 116, 118 may include virtual or augmented reality gear complementary to virtual environments (e.g., virtual reality and/or augmented reality environments) that may be offered by the virtual platform 104. Further, the client device 116,118 may comprise any suitable specific hardware that includes, and/or or uses, crypto-secure components, crypto-secure chips and/or crypto-secure signatures, and the like (e.g., to ensure secure communications between the client devices 116, 118 and other components of the system 100).

In some specific examples, a client device 116, 118 may comprise one or more of: a virtual reality headset: virtual reality station comprising a headset with head, hand and feet tracking technology; a virtual reality headset with haptic feedback hand controllers; a virtual reality station comprising a headset with hand, feet, and torso tracking and haptic feedback technology; a traditional laptop computer; a traditional mobile telephone; amongst other possibilities. Again, these are non-limiting examples, but their diversity of input components and output components is illustrative of the diverse human-machine interface aspects of the client devices 116, 118 of the present specification.

Hence, while not depicted, a client device 116, 118 may be operated by a user. Alternatively, a client device 116, 118 may execute functionality as described herein, in any suitable manner including as operated by a user, or by a "bot". Accordingly, in some examples, a client device 116, 118 may be operated in a hybrid mode; for example a client device 116 may be operated by a bot, however a user may take control at any given time, and/or the bot may perform certain actions while a user must perform other actions (e.g., such as payment), with the bot notifying the user (e.g., by way of a notification at a client device 116, 118) to take such actions once an action requiring the user is to be performed. Furthermore, a client device 116, 118 may be operated by, and/or associated with consumers and/or entities, such as corporate entities, and the like.

While only two client device 116, 118, the system 100 may comprise any suitable number of client devices, including tens, hundreds, thousands of virtual platforms, and/or any suitable number, which may be interacting with the virtual platform 104 (and/or other virtual platforms).

The account profiles 121, 122, 123, 124 may be stored at the virtual platform 104 and/or stored at a respective device and/or engine, and/or accessed and/or retrieved by the virtual platform 104 from a respective device and/or engine when a respective device and/or engine logs into the virtual platform 104. Hence the account profiles 121, 122, 123, 124 may be stored anywhere in the system 100 that is accessible to the virtual platform 104 and/or intermediation engine 102, and/or to any other suitable components of the system 100. For example, an account profile 121, 122, 123, 124 may be stored at a memory and/or database, such as a central repository of account profiles.

A form of an account profile 121, 122, 123, 124 is not particularly limited, and in a simple example, may be simply an alpha-numerical sequence that is unique in relation to other account profiles 121, 122, 123, 124 (and/or other identifiers) of the system 100, such as a user and/or entity identifier, and the like, for example for logging into the virtual platform 104. An account profile 121, 122, 123, 124 may also be more complex as they may be combinations of account credentials (e.g., user name, password, two-factor authentication token, etc.) that uniquely identify a given user and/or entity. Account profiles 114 themselves may also be indexes that point to identifier objects, such as accounts associated with respective users 112. In particular, account profiles 121, 122, 123, 124 may generally be uniquely identifiable within the system 100 in association with what they represent. In yet further examples, an account profile 121, 122, 123, 124 may be locked and unlocked using any suitable crypto-secure process and/or hardware, including but not limited to, crypto-secure components, crypto-secure chips and/or crypto-secure signatures (e.g., of the virtual platform and/or respective devices and/or engines), and locking and/or unlocking of an account profile 121, 122, 123, 124 may occur by way of communication with a respective device and/or engine (e.g., the computing device 102 may lock and/or unlock the first account profile 121, the second client device 116 may lock and/or unlock the second account profile 122, the intermediation engine 102 may lock and/or unlock the third account profile 122, and the first client device 116 may lock and/or unlock the fourth account profile 124).

In particular, as will be presently described, the account profiles 121, 122, 123, 124 may be associated with respective amounts of the first electronic currency of the virtual platform 104. Furthermore, as will be also presently described, the account profiles 121, 122, 123, 124 may be associated with respective data records. Furthermore it is understood that the respective amounts of the first electronic currency associated with the account profiles 121, 122, 123, 124 may be exchanged amongst the account profiles 121, 122, 123, 124, and, similarly, the respective data records associated with the account profiles 121, 122, 123, 124 may be exchanged amongst the account profiles 121, 122, 123, 124. Such exchanges may occur via the first exchange engine 111.

Furthermore, while as described herein the respective amounts of the first electronic currency of the virtual platform 104, and the respective data records associated with the account profiles 121, 122, 123, 124 are depicted as being stored at the account profiles 121, 122, 123, 124, it is understood that the respective amounts of the first electronic currency and/or the respective data records, and/or indicators thereof, may be stored in any suitable memory of the virtual platform 104. Indeed, as the account profiles 121, 122, 123, 124 may be stored external to the virtual platform 104, the respective amounts of the first electronic currency and/or the respective data records, and/or indicators thereof, may be stored in any suitable memory of the virtual platform 104 in association with user and/or entity identifiers of the account profiles 121, 122, 123, 124, and exchanges of such via the first exchange engine 111 may occur vis indicators of the respective amounts of the first electronic currency and/or the respective data records, and changes made to the suitable memory of the virtual platform 104 to indicate such exchanges. Furthermore, when the respective amounts of the first electronic currency are stored in more than one memory, and the like, the first exchange engine 111 may implement any suitable synchronization mechanism to ensure consistency therebetween; furthermore, when there is more than one copy of an amount of the first electronic currency at different memories, and the like, one copy may be designated as a primary copy, for example by the first exchange engine 111, and the other copies may be designated as secondary copies, with the first exchange engine 111 synchronizing the secondary copies with the master copy.

As depicted, for example, the fourth account profile 124 is associated with a first amount 136 of the first electronic currency, which may be exchanged, via the first exchange engine 111, for goods and/or services, as described herein.

However, other types of electronic currencies may be stored in association with the account profiles 121, 122, 123, 124 and/or stored in association in any other suitable manner in the system 100. For example, as depicted, the client device 118 is associated with a second amount 138 of a second electronic currency usable external to the virtual platform 104. While the second amount 138 of the second electronic currency may be stored in association with the second account profile 122 associated with the second client device 118, as the second account profile 122 is depicted in the virtual platform 104, the second amount 138 of the second electronic currency is depicted at the second client device 118, and external to the virtual platform 104, to illustrate that the second amount 138 of the second electronic currency is usable outside the virtual platform 104, such as at the second exchange engine 112.

Each of the intermediation engine 102, the virtual platform 104, and the computing device 106 may be associated with, and/or operated by, different entities. For example, the virtual platform 104 may be associated with, and/or operated by, a gaming and/or social media and/or marketplace entity. The computing device 106 may be associated with an entity offering goods and/or services for exchange in the virtual platform 104, in the form of data records, such as the first data record 131; such goods and/or services may comprise electronic goods and/or services, and/or real world goods and/or services. The intermediation engine 102 may be associated with an entity providing intermediation between the virtual platform 104 and the computing device 106, for example, to-implement exchanges of data records in a manner that allows for the computing device 106 to implement an exchange of the first data record 131 within the virtual platform 104, via the first exchange engine 111, and later receive at least a portion of a second amount of a second electronic currency for the first data record 131 external to the virtual platform 104.

Furthermore, when the system 100 comprises tens to hundreds to thousands of virtual platforms 104, computing devices 106, and/or client devices 116, 118, providing intermediation between such virtual platforms 104 and computing devices 106 may be challenging and excessive use of the first memory 108 may occur. Hence, the intermediation engine 102 is further configured to manage the first memory 108.

According to a specific illustrative example, the present specification may have particular application to the travel industry and thus may (but need not) be biased towards content of interest to travelers, while certain content represented by the first data record 131 may represent travel content. For example, the computing device 106 may be associated with, and/or operated by, a travel entity. Travel entities may broadly encompass different categories of all types of travel service offerings including transportation-entities; accommodation-entities and travel-destination entities. Transportation-entities may provide transportation services, such as airlines, rental car agencies, rail services, ferries, and bus lines. Accommodation-entities may provide, such as hotels, vacation rentals, resorts and B&Bs ("Bed and Breakfasts"), including the lodging at the location where a user 112 arrives after receiving a transportation service. Travel-destination entities may include providers of activities at the location where a lodging is located. Travel-destination entities may thus include, by way of non-limiting examples, restaurants, spas, concert venues, exhibition centers, summits, sporting event venues, fairs, conference venues, sporting arenas, museums, art galleries, tours and resort activity centers and the like. Hence, in such an example the first data record 131 may represent any combination of one or more of such travel related goods and/or services.

In contrast, the second data record 132 may represent any suitable combination of one or more goods and/or services usable within a virtual environment provided by the virtual platform 104, and hence may comprise any suitable combination of one or more virtual goods and/or services. For example, when the virtual platform 104-provides a virtual gaming environment, the second data record 132 may represent virtual clothing and/or a virtual power for an avatar, and the like. However, the second data record 132 may represent any suitable combination of one or more real-world good or services offered by an entity of the virtual platform 104, and/or any other suitable entity, and the like, which, for example, may be provided in the real world upon presentation of the second data record 132, and the like. Furthermore, the second data record 132 may be provided by an entity operating the virtual platform 104 and/or by another entity (e.g. different from an entity of the virtual platform 104) which may provide data records within the virtual platform 104 in exchange for amounts of the first electronic currency.

Returning to the computing device 106, the computing device 106 may generate and/or maintain a rule set 140, which may comprise software code representing one or more rules, which may be provided to the intermediation engine 102. In these examples, the intermediation engine 102 may implement certain functionality for exchanging data records at the second exchange engine 112 based on the rule set 140. In particular, the rule set. 140 may define certain rules that the intermediation engine 102 may follow when exchanging data records at the second exchange engine 112 on behalf of the computing device 106.

Turning now to the currency engine 114, the currency engine 114 may comprise one or more computing devices, and/or one or more servers and/or one or more cloud computing devices, and the like which interface with one or more currency information sources 142, such as banking institutions, trading platforms, and the like, to determine rates of currency exchange. The currency engine 114 may provide such rates to the intermediation engine 102, for example to assist with intermediation engine 102 with implementing functionality for exchanging data records at the second exchange engine 112. For example, the currency engine 114 may interface with the currency information sources 142 to determine an exchange rate between the first electronic currency and the second electronic currency.

The system 100 may comprise any other suitable engines, memories and/or databases, and the like, for implementing certain functionality. For example, the system 100 may comprise a one or more databases of exchange rates, which may be managed and/or updated by the currency exchange 114 to store rates of exchange between various currencies.

The computing device 106 may implement, and/or be associated with, one or more of: a rules engine for generating and/or maintaining the rule set 140; a data record manager for managing associated data records, including, but not limited to, the first data record 131; an account engine which may communicate with the currency engine 114 and/or the one or more databases of exchange rates, to determine certain rules of the rule set 140, at least some of which may be based on rates of exchange.

Similarly, the intermediation engine 102 may implement, and/or be associated with, one or more of: a data record manager for managing associated data records as described herein; an account engine which may communicate with the currency engine 114 and/or the one or more databases of exchange rates, to determine when to implement and/or perform exchanges via the second exchange engine 112, and the like.

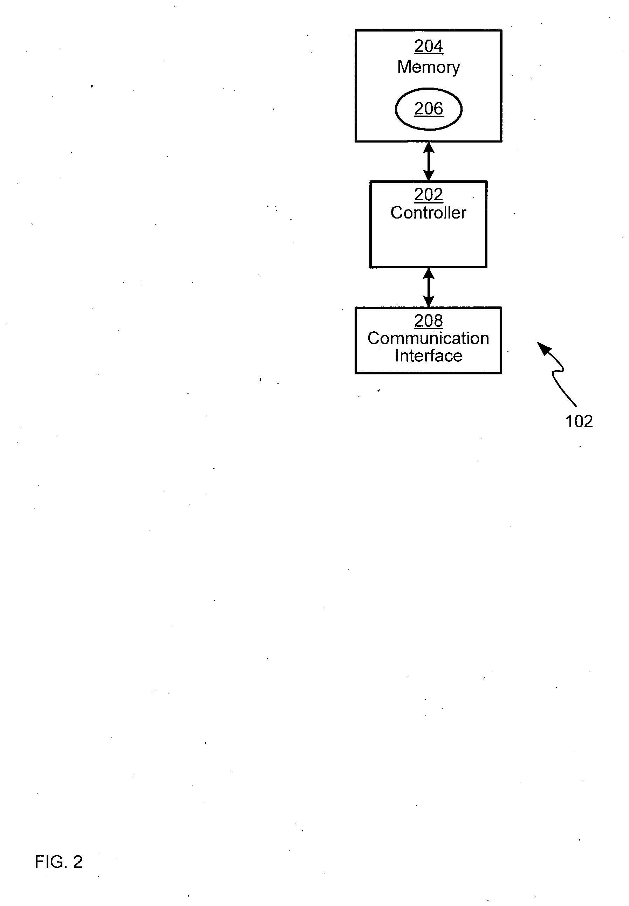

Having described an overview of system 100, hardware infrastructure of certain components of the system 100 will next be described. In particular, FIG. 2 depicts a schematic diagram of a non-limiting example of components of the intermediation engine 102.

In the depicted example of FIG. 2, the intermediation engine 102 includes at least one controller 202 interconnected with a memory 204, storing an application 206, and a communication interface 208.

The controller 202 may be implemented as a plurality of processors or one or more multi-core processors and/or may include one or more central processing units (CPUs). The controller 202 be configured to execute different programing instructions, as described herein.

The memory 204 may include any suitable combination of non-volatile and volatile memories. A non-volatile memory, of the memory 204, may be based on any persistent memory technology, such as an Erasable Electronic Programmable Read Only Memory ("EEPROM"), flash memory, solid-state hard disk (SSD), other type of hard-disk, or combinations of them. Hence, a non-volatile memory, of the memory 204, may also be described as a non-transitory computer readable media.

A volatile memory, of the memory 204, may be based on any random access memory (RAM) technology. For example, volatile memory, of the memory 204, may be based on a Double Data Rate (DDR) Synchronous Dynamic Random-Access Memory (SDRAM).

Other types of non-volatile and/or volatile memory are contemplated and/or may be provided.

The controller 202 and the memory 204 may be generally comprised of one or more integrated circuits (ICs).

The controller 202 is also interconnected with the communication interface 208, which enables the intermediation engine 102 to communicate with the other components of the system 100, for example via a network. The communication interface 208 therefore may include any suitable components (e.g., network interface controllers (NICs), radio units, and the like) to communicate via any suitable network. The specific components of the communication interface 208 may be selected based upon the nature of the network used to communicate, and/or local communication between components of the system 100, and the like.

While not depicted in FIG. 2, the intermediation engine 102 may also include input and output components connected to the controller 202, such as keyboards, mice, display components (e.g., display screens), and the like (not shown).

The components of the intermediation engine 102 mentioned above may be deployed in a single enclosure, or in a distributed format. In some examples, therefore, the intermediation engine 102 may include a plurality of controllers and/or processors, either sharing the memory 204 and the communication interface 208, or having distinct associated memories and communication interfaces. As such, it is understood that the memory 204 and/or a portion of the memory 204 may be internal (e.g., as depicted) or external to the intermediation engine 102; regardless, the controller 202 is understood to have access to the memory 204.

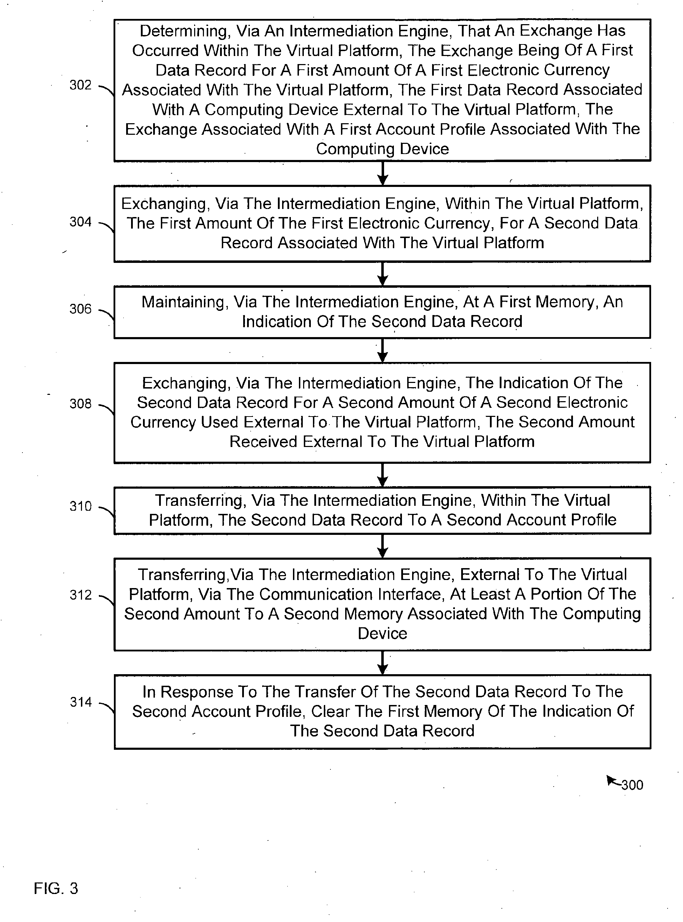

The memory 204 also stores computer-readable programming instructions, executable by the controller 202, in the form of various applications, including the application 206. As will be understood by those skilled in the art, the controller 202 executes the instructions of the application 206 (and any other suitable applications) in order to perform various actions defined by the instructions contained therein including, but not limited to, implementing the intermediation engine 102 and/or the blocks of a method described with respect to FIG. 3. In the description below, the controller 202, and more generally the intermediation engine 102, and/or the intermediation engine 102, are understood to be configured to perform those actions. It will be understood that they are so configured via the execution (by the controller 202) of the instructions of the applications stored in memory 204.

In some examples, the application 206 may comprise one or more programmatic applications to implement functionality of the intermediation engine 102, as described herein.

Alternatively, or in addition, the application 206 may comprise one or more machine learning algorithms to implement functionality of the intermediation engine 102, as described herein. For example, a machine learning algorithm of the application 206 may be trained to determine when to implement an exchange of a data record for an electronic currency at the second exchange engine 112. For example such a machine learning algorithm may be trained to balance maximizing an amount of an electronic currency of such an exchange, and minimizing a waiting time period for such an exchange.

The infrastructure of the intermediation engine 102, or a variant thereon, can be used to implement any of the computing components of the system 100, including, but not limited to, the virtual platform 104, the computing device 106, the engines 112, 114, and the client devices 116, 118. Furthermore, the intermediation engine 102, the virtual platform 104, the computing device 106, the engines 112, 114 may be implemented as virtual machines and/or with mirror images to assist in load balancing (e.g., and which may be used to optimize performance and/or resource distribution in the system 100).

Furthermore, it is understood that the core components of the controller 202, the memory 204, and the communication interface 208, as described in relation to the intermediation engine 102, have analogues in the different form factors of client machines such as those that can be used to implement the client devices 116, 118 as described herein.

Attention is now directed to FIG. 3 which depicts a flowchart representative of a method 300 for controlling memory usage associated with an intermediation engine for a virtual platform, such as the client device 110. The operations of the method 300 of FIG. 3 correspond to machine readable instructions that may be executed by the intermediation engine 102, and specifically the controller 202. In the illustrated example, the instructions represented by the blocks of FIG. 3 are stored at the memory 204 for example, as the application 206. The method 300 of FIG. 3 is one way in which the controller 202 and/or the intermediation engine 102 and/or the system 100 may be configured. Furthermore, the following discussion of the method 300 of FIG. 3 will lead to a further understanding of the system 100, and its various components.

Put another way, the intermediation engine 102 may comprise the controller 202 and the memory 204 storing instructions executable on the controller 202, to cause the controller 202 to implement the blocks of the method 300.

The method 300 of FIG. 3 need not be performed in the exact sequence as shown, or with certain blocks omitted, performed in parallel or in a different order than shown. Accordingly, the elements of method 300 are referred to herein as "blocks" rather than "steps." The method 300 of FIG. 3 may be implemented on variations of the system 100, as well and/or by any other suitable component of the system 100.

At a block 302, the controller 202, and/or the intermediation engine 102, determines, via the communication interface 208, that an exchange has occurred within the virtual platform 104, the exchange being of a first data record 131 for a first amount 136 of a first electronic currency associated with the virtual platform 104, the first data record 131 associated with a computing device 106 external to the virtual platform 104, the exchange associated with a first account profile 121 associated with the computing device 106.

At a block 304, the controller 202, and/or the intermediation engine 102 exchanges, within the virtual platform 104, the first amount 136 of the first electronic currency, for a second data record 132 associated with the virtual platform 104.

At a block 306, the controller 202 and/or the intermediation engine 102, maintains, at the first memory 108, an indication of the second data record 132,

At a block 308, the controller 202 and/or the intermediation engine 102, exchanges the indication of the second data record 132 for a second amount 138 of a second electronic currency used external to the virtual platform 104, the second amount 138 received, external to the virtual platform 104.

At a block 310, the controller 202 and/or the intermediation engine 102, transfers, within the virtual platform 104, the second data record 132 to a second account profile 122.

At a block 312, the controller 202 and/or the intermediation engine 102, transfers, via the communication interface 208, external to the virtual platform 104, at least a portion of the second amount 138 to a second memory associated with the computing device 106;

At a block 314, the controller 202 and/or the intermediation engine 102, in response to the transfer of the second data record 132 to the second account profile 122, clears the first memory 108 of the indication of the second data record 132.

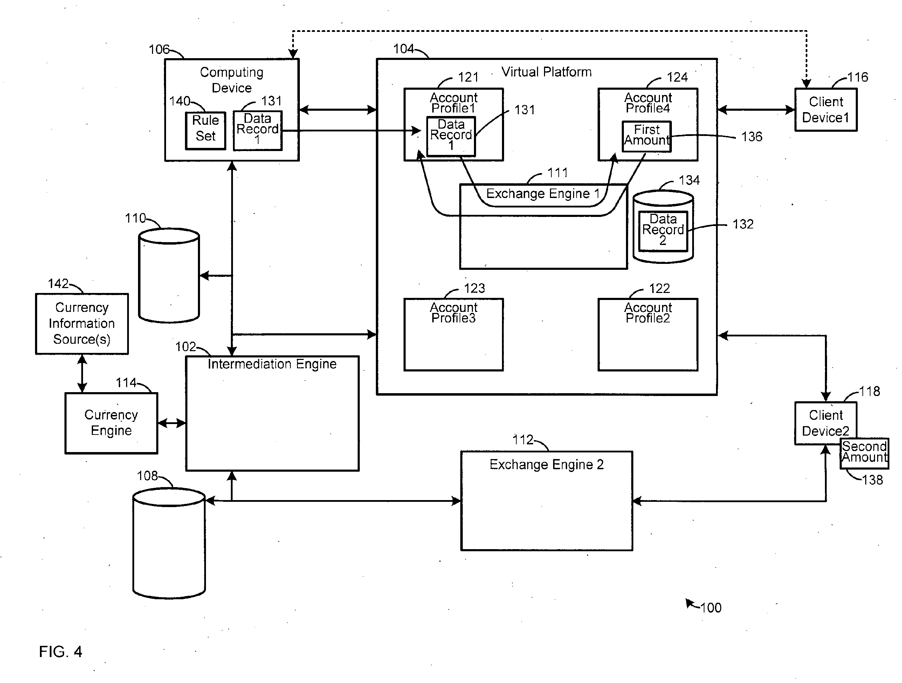

Aspects of the method 300 will next be described in more detail with respect to FIG. 4, FIG. 5, FIG. 6, FIG. 7, FIG. 8, FIG. 9, FIG. 10, FIG. 11, and FIG. 12. FIG. 4, FIG. 5, FIG. 6, FIG. 7, FIG. 8, FIG. 9, FIG. 10, FIG. 11, and FIG. 12 are substantially similar to FIG. 1, with like components having like numbers.

With attention first directed to FIG. 4, the computing device 106 transfers the first data record 131 to the virtual platform 104, for example to provide the first data record 131 as a candidate for an exchange of a first amount of the first electronic currency associated with the virtual platform 104. While as depicted the first data record 131 is transferred to the virtual platform 104, in some examples, rather than the first data record 131 being transferred, an indication of the first data record 131 is transferred to the virtual platform 104 (e.g., rather than the first data record 131 itself). Furthermore, while as depicted the first data record 131 is stored at the first account profile 121, the first data record 131, or an indication thereof, may be stored in any suitable manner at the virtual platform 104.

As depicted, an exchange of the first data record 131 (or an indication thereof) occurs, via the first exchange engine 111, for the first amount 136 of the first electronic currency from the fourth account profile 124 associated with the first client device 116. In particular, the first client device 116 may have been operated to browse a virtual store represented by the first account profile 121, and the first client device 116 may have been operated to initiate the exchange of the first data record 131 for the first amount 136 of the first electronic currency.

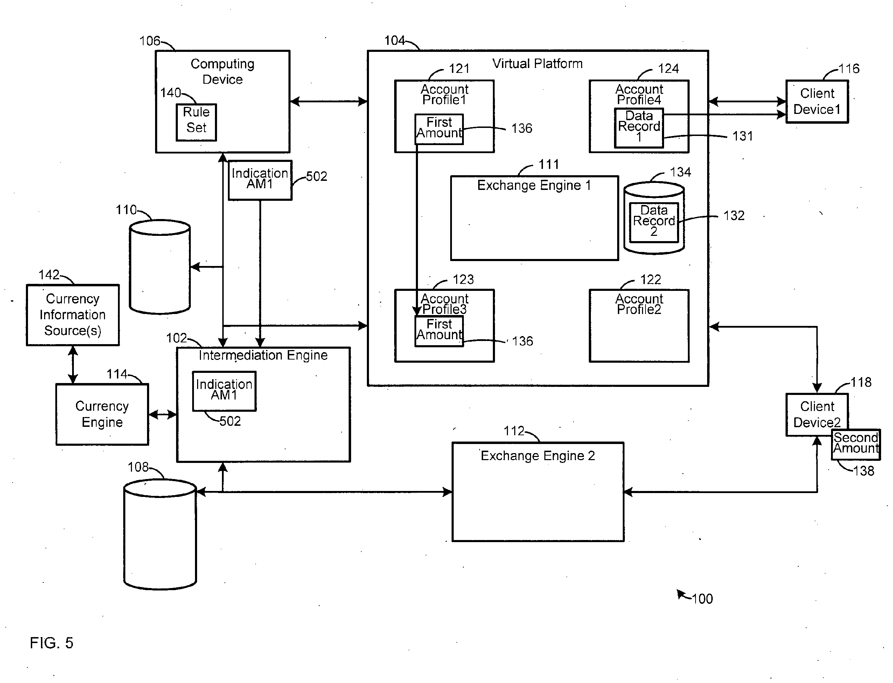

Attention is next directed to FIG. 5, which follows from FIG. 4. In FIG. 5, the first data record 131 (or an indication thereof) has been transferred to the fourth account profile 124, and the first amount 136 of the first electronic currency has been transferred to the first account profile 121. As depicted, the first data record 131 (or an indication thereof) may be transferred out of the virtual platform 104 to the first client device 116.

When an indication of the first data record 131 is transferred to the first client device 116, the first data record 131 may still be located at the computing device 106; in these examples, the first client device 116 may communicate with the computing device 106, external to the virtual platform 104, to exchange the indication of the first data record 131 for the first data record 131. Such an external communication is represented in FIG. 5 via communication link between the computing device 106 and the first client device 116, depicted in dashed lines as such a communication link may be temporary.

While the first amount 136 of the first electronic currency has been transferred to the first account profile 121, it is understood that the first amount 136 of the first electronic currency may not be transferred out of the virtual platform 104.

As such, the intermediation engine 102 determines (e.g., at the block 302 of the method 300) that an exchange has occurred within the virtual platform 104, the exchange being of the first data record 131 for the first amount 136 of the first electronic currency associated with the virtual platform 104, the first data record 131 associated with the computing device 106 external to the virtual platform 104, the exchange associated with a first account profile 121 associated with the computing device 106.

For example, as depicted, the computing device 106 may notify the intermediation engine 102 (e.g., via the communication interface 208) of the exchange by providing, to the intermediate 102, an indication 502 of the first amount 136. For example, the indication 502 may indicate the amount of the first electronic currency received in the exchange.

As depicted, the first amount 136 may be transferred within the virtual platform 104 from the first account profile 121, associated with the computing device 106, to the third account profile 123 associated with the intermediation engine 102. For example, while not depicted, the computing device 106 may provide a command to the virtual platform 104 to initiate the transfer. In these examples, the indication 502 of the first amount 136 may be provided to the intermediation engine 102 (e.g., via the communication interface 208) from the virtual platform 104.

Alternatively, or in addition, the intermediation engine 102 may determine that the exchange has occurred by monitoring exchanges within the virtual platform 104 of data records associated with the computing device 106, for example by requesting, from the virtual platform 104, and/or via the first account profile 121, that the intermediation engine 102 be notified of such exchanges.

As also depicted in FIG. 5, the intermediation engine 102 exchanges, within the virtual platform 104, the first amount 136 of the first electronic currency, for the second data record 132 associated with the virtual platform 104.

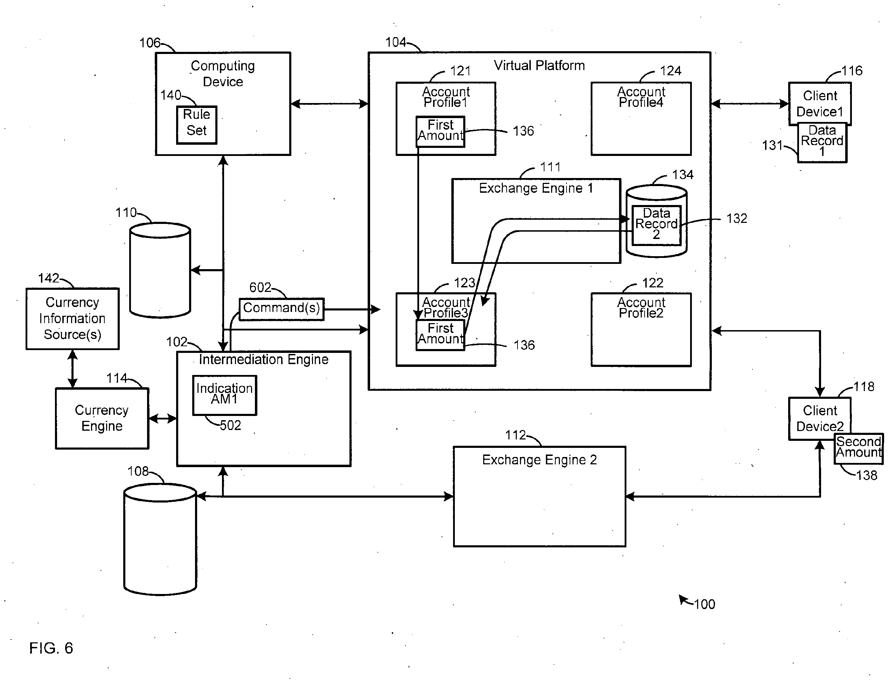

Attention is next directed to FIG. 6, which follows from FIG. 5. In FIG. 6, as depicted, the intermediation engine 102 provide one or more commands 602 to the virtual platform 104 to locate one or more data records provided by the virtual platform 104 that may be exchanged for the first amount 136 of the first electronic currency. For example, the one or more commands 602 may comprise one or more requests and/or one or more sets of search criteria for data records, and/or combinations of data records, provided by the virtual platform 104 that may be exchanged for the first amount 136 of the first electronic currency. Such one or more commands 602 may comprise an indication of the first amount 136 of the first electronic currency, and the like.

While not depicted, the intermediation engine 102 may have access to more than the first amount 136 of the first electronic currency, for example due to other exchanges of data records for other amounts of the first electronic currency that the intermediation engine 102 is managing, on behalf of the computing device 106, or other computing devices (not depicted). In these examples, the intermediation engine 102 provide the one or more commands 602 to the virtual platform 104 to locate one or more data records provided by the virtual platform 103 that may be exchanged for an amount that is more than the first amount 136 of the first electronic currency. Put another way, the intermediation engine 102 may accumulate amounts of the first electronic currency at the third account profile 123 and locate one or more data records provided by the virtual platform 103 that may be exchanged for any suitable amount of the first electronic currency.

However, as depicted, it is understood that the second data record 134 may be exchanged for the first amount 136 of the first electronic currency and the one or more commands 602 may be used to locate the second data record 134 and implement an exchange of the first amount 136 for the second data record 134 via the first exchange engine 111. For example, in response to receiving one or more requests and/or one or more sets of search criteria for data records (e.g. in a first set of the one or more commands 602), and/or combinations of data records, provided by the virtual platform 104, that may be exchanged for the first amount 136 of the first electronic currency, the virtual platform 104 may return, to the intermediation engine 102, a list of data records (e.g., including the second data record 134) that meet the search criteria, and the like. The intermediation engine 102 may responsively select the second data record 134 from the list of data records, and provide a second set of the one or more commands 602 to the virtual platform 104 to acquire the second data record 134 via the first exchange engine 111. Put another way, the one or more commands 602 may be used to search for data records, select the second data record 134 from results of such a search, and acquire the second data record 134 (e.g. initiate the exchange of the first amount 136 for the second data record 134 via the first exchange engine 111).

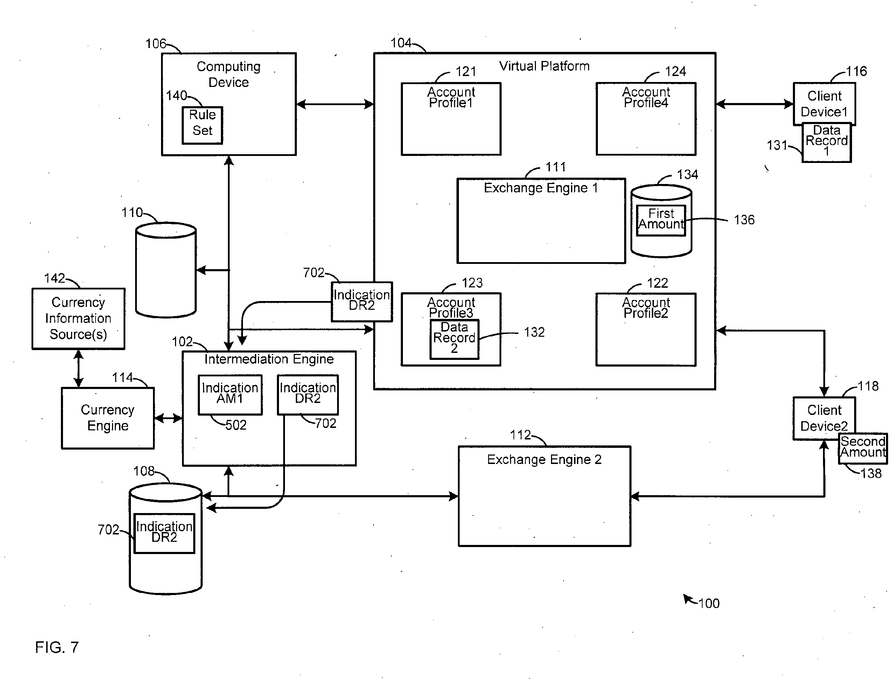

Attention is next directed to FIG. 7, which follows from FIG. 6. In FIG. 7, the second data record 132 is stored in association with the third account profile 123 associated with the intermediation engine 102, and the first amount 136 of the first electronic currency is stored at the second memory 134. Put another way, the first amount 136 of the first electronic currency has been transferred to the entity operating the virtual platform 104, and/or the first amount 136 of the first electronic currency is transferred to any suitable entity that provided the second data record 132, as previously described, (and such a transfer may occur by and/or via the virtual platform 104).

As also depicted on FIG. 7, the intermediation engine 102 receives an indication 702 of the second data record 132 (e.g., via the communication interface 208), for example in conjunction with the exchange of the second data record 134 may be exchanged for the first amount 136 of the first electronic currency, and stores and/or maintains (e.g., at the block 306 of the method 300) the indication 702 of the second data record 132 at the first memory 108. The indication 702 is understood to identify the second data record 132 in any suitable manner, such as a textual and/or image-based description of the second data record 132.

Furthermore,while not depicted for simplicity, the indication 702 may be stored at the first memory 108 in association with the indication 502 of the first amount 136.

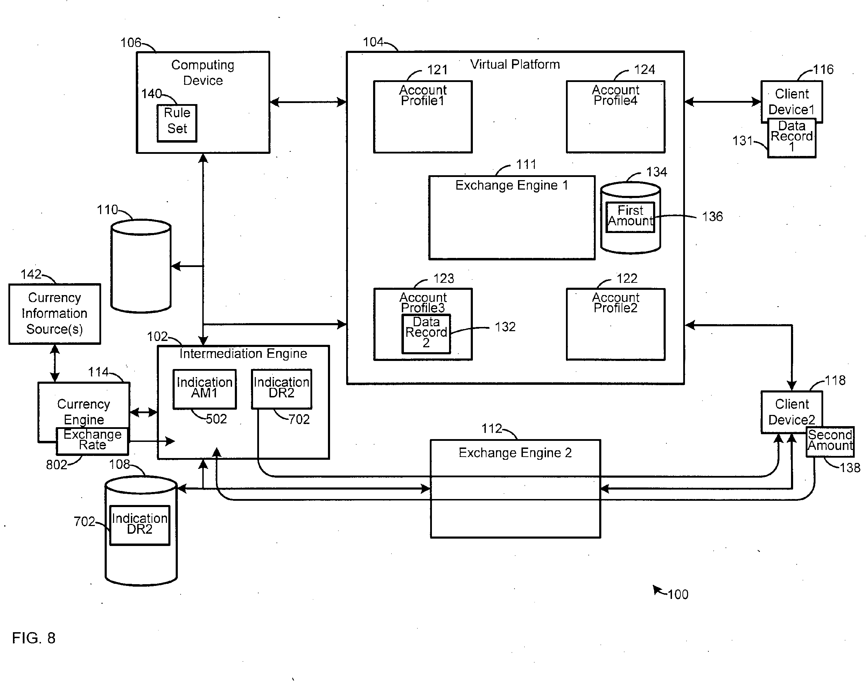

Attention is next directed to FIG. 8, which follows from FIG. 7. In FIG. 8, the intermediation engine 102, exchanges the indication of the second data record 132 for the second amount 138 of a second electronic currency used external to the virtual platform 104, and the second amount 138 is received, external to the virtual platform 104.

For example, the second exchange engine 112 may be a component of a marketplace platform, and the like, and the intermediation 102 may interact with such a marketplace platform to provide, at such a marketplace platform, the indication 702 of the second data record 132 as a candidate for an exchange of a second amount of the second electronic currency usable outside the virtual platform 104, such as the second amount 138.

As also depicted in FIG. 8, the intermediation engine 102 may determine the second amount 138 of the second electronic currency from the first amount 136 of the first electronic currency (e.g., from the indication 502 of the first amount 136 of the first electronic currency) based on an exchange rate 802 between the second electronic currency and the first electronic currency. For example, as depicted, the intermediation engine 102 may determine the exchange rate 802 via the currency engine 114 external to the intermediation engine 102 and the virtual platform 104.

Put another way, the method 300 may further comprise the controller 202 and/or the intermediation engine 102: determining the second amount 138 of the second electronic currency from the first amount 136 of the first electronic based on the exchange rate 802 between the second electronic currency and the first electronic currency.

In particular, the method 300 may more specifically further comprise the controller 202 and/or the intermediation engine 102: determining the exchange rate 802 via the currency engine 114 external to the intermediation engine 102 and the virtual platform 104.

However, the exchange rate 802 may be determined in any suitable manner. For example, rather than the exchange rate 802 being received from the currency engine 114, the intermediation engine 102 may use a default value of the exchange rate 802, that may be stored at the intermediation engine 102, and updated periodically (e.g., via the currency engine 114 and/or in any other suitable manner).

In particular, the intermediation engine 102 may determine the second amount 138 of the second electronic currency to be at least similar to, or greater than, the first amount 136 of the first electronic currency using the exchange rate 802.

Furthermore, the intermediation engine 102 may determine a type of the second electronic currency into which the amount of the first amount 136 of the first electronic currency is to be converted based on any suitable factors. For example, the intermediation platform 102 may default to one type of currency (e.g., such as a particular national currency, or a particular block-chain base currency), and/or the intermediation engine 102 may provide the indication 702 of the second data record 132 as a candidate for an exchange of a second amount of the second electronic currency in the marketplace platform according to where the marketplace platform is accessed, for example by the second client device 118. For example, the second client device 118 may access the marketplace platform from a given country (e.g., as indicated by a network address of the second client device 118 and/or.metadata associated with the access), and the marketplace platform may show the indication 702 of the second data record 132 as a candidate for an exchange in the currency of the given country.

Regardless, the second amount 138 may be at least equal to, or greater than, the first amount 136, once the first amount 136 is translated into a type of the second electronic currency using the exchange rate 802.

In some examples, the intermediation engine 102 may provide the indication 702 of the second data record 132 as a candidate for an exchange of a second amount of the second electronic currency upon receipt of the indication 702. However, in other examples, the intermediation engine 102 may wait a given time period before providing the indication 702 of the second data record 132 as a candidate for an exchange of a second amount of the second electronic currency.

For example, the intermediation engine 102 may be receiving the exchange rate 802 over a period of time, and/or periodically, and the like, prior to receiving the indication 702 of the second data record 132. Hence, the intermediation 102 may have access to a history of the exchange rate 802, and such a history may enable the intermediation engine 102 to determine and/or predict when the exchange rate 802 is more favorable. For example, the exchange rate 802 of the first electronic currency for the second electronic currency may increase and/or decrease over time and the history of the exchange rate 802 may indicate an estimated time when the exchange rate 802 may increase and/or a time when a second amount of the second electronic currency that may be received for the second data record 132 may be maximized.

As such, in these examples, the method 300 may further comprise, the controller 202 and/or the intermediation engine 102: exchanging the second data record 132 for the second amount 138 of the second electronic currency after a given time period; and determine the given time period by estimating changes in the exchange rate 802 between the second electronic currency and the first electronic currency. For example such estimating of changes in the exchange rate 802 between the second electronic currency and the first electronic currency may occur using a history of the exchange rate 802.

Furthermore, in some of these examples, the method 300 may further comprise the controller 202 and/or the intermediation engine 102: determining one or more of the given time period and the estimated changes in the exchange rate 802 using one or more machine learning algorithms.

For example, as has been previously described, the intermediation engine 102 may comprise a machine learning algorithm (or more than one machine learning algorithm), for example as represented by the application 206, that may be used to determine one or more of the given time period and the estimated changes in the exchange rate 802. For example, such a machine learning algorithm may receive, as input, a history of the exchange rate 802 (e.g., in form of a table, pairs of dates and time, and the respective exchange rate 802 on those dates and time, and the like), and output a given time period, starting from a current time, at which the exchange rate 802 is estimated to be maximized.

In some examples, a limit may be placed on the given time period. For example, a maximum given time period may be provided, such as 1 month, 2 months, 6 months, and the like, amongst other possibilities, within which the exchange of the second data record for a second amount of the second electronic currency is to occur.

In some examples, such a maximum time period may be particular to the computing device 106, and may be defined by the rule set 140. For example, the rule set 140 may indicate that a maximum time period in which the exchange is to occur is 1 month. Put another way, an entity associated with the computing device 106 may indicate that the exchange is to occur within 1 month, even if a loss occurs, relative to the first amount 136, in the exchange. Hence, in such examples, the second amount received in the exchange of the indication 702 of the second data record 132 may be less then the first amount 136, when the first amount 136 is translated into the second electronic currency.

The rule set 140 may define other parameters associated with the exchange. For example the rule set 140 may define a type of the second electronic currency that is to be used in the exchange.

Hence, in these examples, the method 300 may further comprise the controller 202 and/or the intermediation engine 102: exchanging the second data record 132 for the second amount 138 of the second electronic currency based on the rule set 140 associated with the computing device 106.

However, in other examples, the given time period may be estimated by the intermediation engine 102 estimating a demand for the second data record 132. For example, as previously mentioned, the second data record 132 may represent a particular virtual good and/or virtual service available in the virtual platform 104. In some virtual gaming platforms, demand for some virtual goods and/or virtual services may increase over time, for example, when such virtual goods and/or virtual services are considered rare, and the like, and/or may be provided within such virtual gaming platforms for short periods of time; as such, due to demand, their value may increase.

The intermediation engine 102 may be further configures to estimate such a demand for the second data record 132, and estimate when the second amount 138 of the second electronic currency may be maximized due to such a demand. The intermediation 102 may hence provide the second data record 132 as a candidate for an exchange when the second amount 138 is estimated to be maximized, after a given time period (e.g., from receiving the indication 702 of the second data record 132).

Furthermore, the method 300 may further comprise the controller 202 and/or the intermediation engine 102: determining one or more of the given time period and the estimated changes in the demand using one or more machine learning algorithms.

Furthermore, the method 300 may further comprise the controller 202 and/or the intermediation engine 102: exchanging the second data record 132 for the second amount 138 of the second electronic currency after a given time period; and determine the given time period by estimating a demand for the second data record 132 as a function of time.

For example, such a machine learning algorithm may receive, as input, a history of demand and/or amounts of the second electronic currency, which may be normalized to another currency which may be more stable than the second electronic currency, received in exchanges of other data records, similar to the second data record 132 (e.g., in form of a table, pairs of dates and time, and the amounts of the second electronic currency and/or a amount normalized to another currency, received on those dates and time, and the like), and output a given time period, starting from a current time, at which the second amount 138 is estimated to be maximized. Such a history of demand and/or amounts (e.g. and/or normalized amounts) of the second electronic currency received in exchanges of other data records may be received, at the intermediation engine 102, from the virtual platform 104 the marketplace platform of which the second exchange engine 112 may be a component. Alternatively, the intermediation engine 102 may determine such a history from previous exchanges of previous data records that the intermediation engine 102 implemented at the second exchange engine 112.

Hence, the second amount 138 of the second electronic currency may be determined in any suitable manner, and when to implement an exchange of the second data record 132 for the second amount 138 may be determined in any suitable manner.

FIG. 8 further depicts the intermediation engine 102 implementing the exchange (e.g., at the block 308 of the method 300) of the indication 702 of the second data record 132 for the second amount 138 of the second electronic currency via the second exchange engine 112.

In particular, the second client device 118 may have been operated to browse a virtual store at a marketplace platform of which the second exchange engine 112 may be a component, and the second client device 118 may have been operated to initiate the exchange of the second data record 132 for the second amount 138 of the second electronic currency.

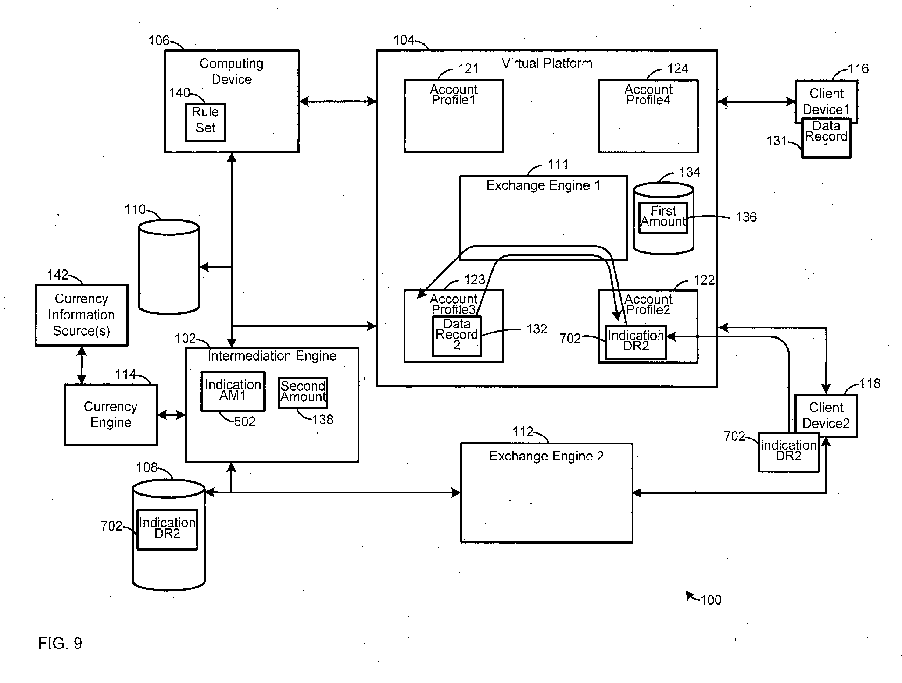

Attention is next directed to FIG. 9, which follows from FIG. 8. In FIG. 8, the second amount 138 of the second electronic currency has been received at the intermediation engine 102, and the indication 702 of the second data record 132 has been received at the second client device 118. As further depicted, the second client device 118 may provide the indication 702 of the second data record 132 to the virtual platform 104, for example in association with the second account profile 122 associated with the second client device 118, and the indication 702 of the second data record 132 may be exchanged for the second data record 132, for example using the first exchange engine 111. In particular, the indication 702 of the second data record 132 may identify the third account profile 123 associated with the intermediation engine 102, and the first exchange engine 111 may retrieve the second data record 132 from the third account profile 123 upon receipt of the indication 702 of the second data record 132.

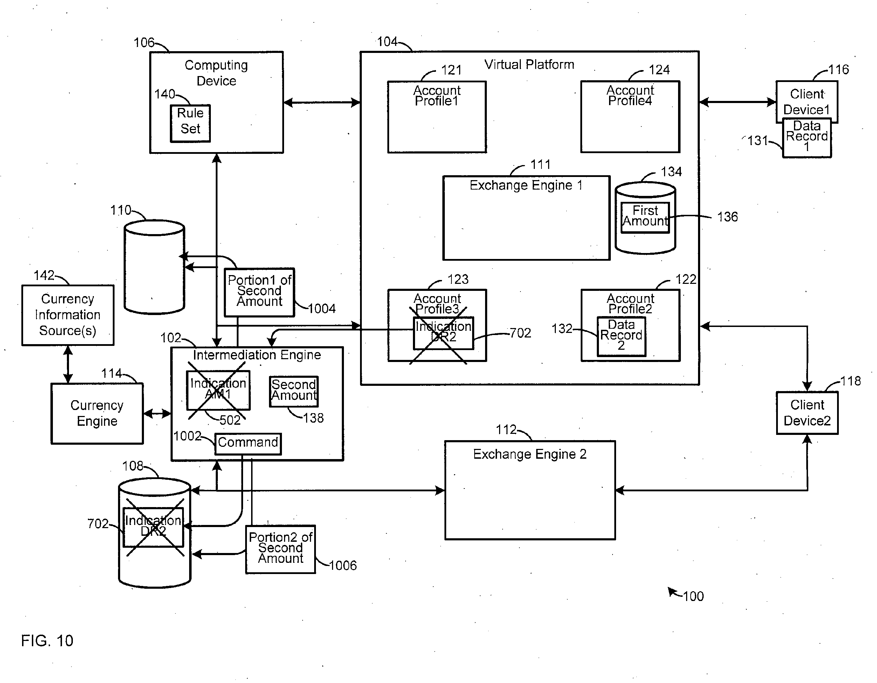

Attention is next directed to FIG. 10, which follows from FIG. 9. In FIG. 10, the indication 702 of the second data record 132 has been received at the third account profile 123 associated with the intermediation engine 102, and the second data record 132 has been received at the second account profile 122 associated with the second client device 118.

As further depicted in FIG. 10, the indication 702 of the second data record 132 may be provided to the intermediation engine 102, by the virtual platform 104 upon completion of the exchange, and/or the intermediation engine 102 may periodically request any such indications from the virtual platform 104, and the like.

Receipt of the indication 702 of the second data record 132 at the intermediation engine 102 may indicate to the intermediation engine 102 that the transfer of the second data record 132 to the second account profile 122 has occurred in the virtual platform 104.

As such, in response to the transfer of the second data record 138 to the second account profile 122, as depicted, the intermediation engine 102 may provide a command 1002 to the first memory 108 to clear (e.g., at the block 314 of the method 300) the first memory 108 of the indication of the second data record 132. Hence, as depicted, as represented by an "X" in FIG. 10 through the indication 702 of the second data record 132 at the first memory 108, the indication 702 of the second data record 132 is deleted at the first memory 108. Similarly, the indication 502 of the first amount 136 is cleared and/or deleted at the intermediation engine 102 (and/or the first memory 118). Similarly, the indication 502 of the first amount 136 may be cleared and/or deleted at the third account profile 123.

While such clearing may only clear a small amount of the first memory 108, as the intermediation engine 102 may implemented tens to hundreds to thousands of the exchanges related to second data records depicted herein, clearing the first memory 108 of a plurality of indications of such second data records may lead to a substantial clearing of the first memory 108, and hence more efficient use of memory resources at the first memory 108 (e.g., at least as compared to no clearing occurs).

FIG. 10 further depicts the intermediation engine 102 transferring (e.g., at the block 312 of the method 300), external to the virtual platform 104, at least a portion of the second amount 138 (e.g., as depicted a first portion 1004 of the second amount 138) to the second memory 110 associated with the computing device 106. Hence, the computing device 106 is understood to receive, at least at the second memory 110, the first portion 1004 of the second amount 138 of the second electronic currency, in exchange for the first amount 136 of the first electronic currency. Put another way, a value of the first amount 136 of the first electronic currency, which may not be used external to the virtual platform 104, as been extracted from the virtual platform 104 in form of the second amount 138 of the second electronic currency, by the intermediation engine 102, using the indication 702 of the second data record 132, and at least a portion of such value is provided to the computing device 106, at least at the second memory 110, in the form of the first portion 1004 of the second amount 138.

In some examples the first portion 1004 of the second amount 138 may be a same as the second amount 138. However, as depicted, the second amount 138 may be divided between the first portion 1004 of the second amount 138 and a second portion 1006 of the second amount 138. The second portion 1006 may be less than the first portion 1004 and may be defined by the rule set 104. Alternatively, and/or in addition, the second portion 1006 may be a percentage of the second amount 138 agreed on by respective entities associated with the intermediation engine 102 and the computing device 106.

As depicted, the second portion 1006 may be stored at the first memory 118.

It is hence further understood that at least the block 312 and the block 314 may be performed in any suitable order and/or concurrently. For example the transfer of the first portion 1104 may occur prior to, and/or concurrently with, the first memory 118 being cleared.

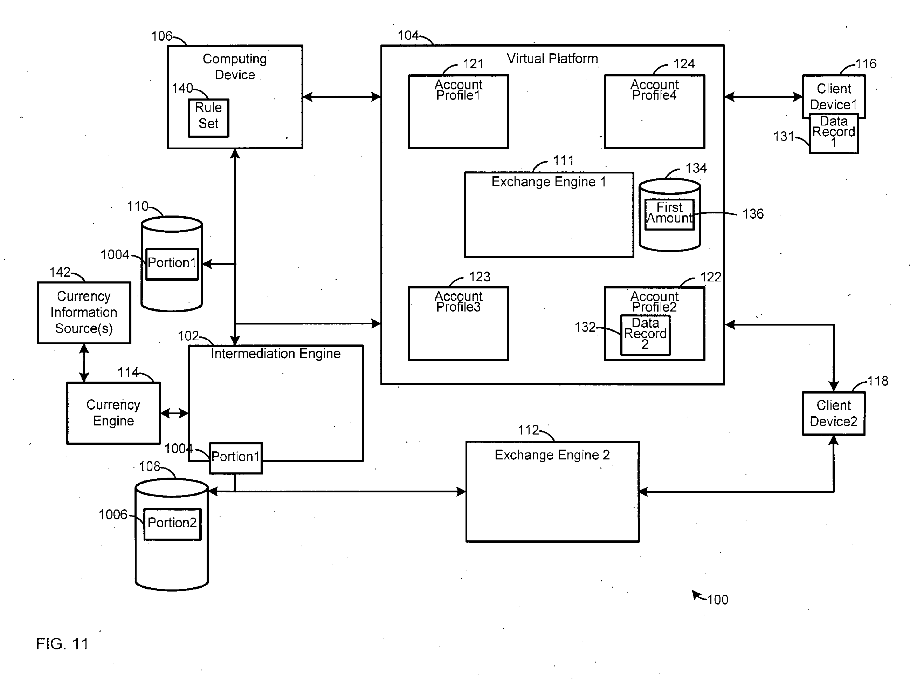

Attention is next directed to FIG. 11, which follows from FIG. 10, and depicts a state of the system 100 after the method 300 has been implemented. In particular the first portion 1004 of the second amount 138 is stored at the first memory 118, and the second portion 1006 of the second amount 138 is stored at the second memory 110.

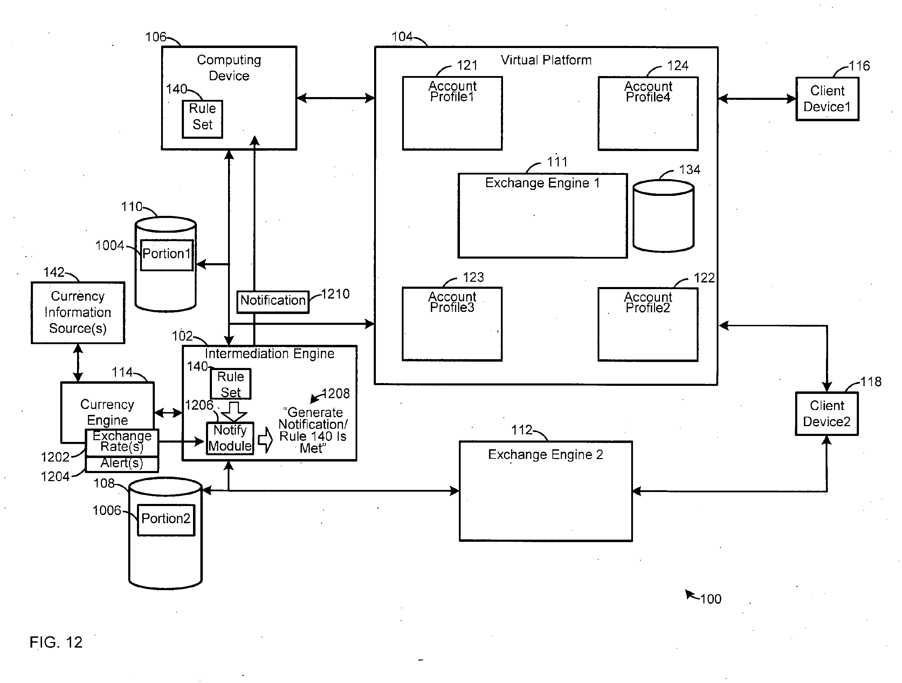

The method 300 may include other aspects. For example, attention is directed to FIG. 12 which depicts the system 100 in a notify mode, in which notifications may be provided to the computing device 106 (e.g., and/or other computing devices) when certain conditions are met. While the notify mode of the system 100 is depicted as independent from states of the system 100 in FIG. 1, FIG. 4, FIG. 5, FIG. 6, FIG. 7, FIG. 8, FIG. 9, FIG. 10, and FIG. 11, the notify mode may be implemented at any suitable time in conjunction with any of the blocks of the method 300, or independent of the method 300. For illustrative purposes, however, the memories 108, 110 are depicted as storing the respective portions 1004, 1006.

As depicted, in the notify mode, the intermediation engine 102 monitors a plurality of electronic currencies, for example by receiving exchange rates 1202 of such electronic currencies from the currency engine 114, which may retrieve such exchange rates 1202 from the currency information sources 140. Alternately, and/or in addition, the intermediation engine 102 may monitors the plurality of electronic currencies by receiving one on or more alerts 1204 from the currency engine 114 of changes in such electronic currencies (e.g., changes in exchange rate) though such alerts 1204 may alternatively, or in addition, include other information, such as information that may affect the exchange rates 1202 (e.g., changes in interest rates, and the like, associated with one or more of the plurality of electronic currencies).

As depicted, the intermediate engine 102 may implement a notify module 1206, and the like, which receives, as input, one more of the exchange rates 1202 and the alerts 1204 and determine whether or not the of the exchange rates 1202 and the alerts 1204 meet one or more given conditions. In some examples, as depicted, such conditions may be at least partially particular to the computing device 106 and such particular conditions may be defined by the rule set 140. Alternatively, and/or in addition, such conditions may be defined by the notify module 1206.

In particular, the notify module 1206 may comprise a machine learning algorithm that is trained to determine when one more of the exchange rates 1202 and the alerts 1204 meets certain conditions, and output an indication 1208 thereof. For example, as depicted, the notify module 1206 has output an indication 1208 to "Generate Notification" for example as a "Rule 140 Is Met". Indeed, it is understood that the rule set 140 may define classifiers for the machine learning algorithm that define when certain conditions are met.

In response to the indication 1208, and the like, the intermediation engine 102 notifies the computing device 106 of changes in one or more the plurality of currencies that affects exchange rates therebetween, for example in the form of a notification 1210. In response to receiving the notification 1210, the computing device 106 may responsively implement a remedial action, such as converting the first portion 1004 of the second electronic currency (or any other amounts of the second electronic currency) into one or more other electronic currencies, and the like, for example at a currency exchange platform (not depicted), and the like. Similarly, the intermediation engine 102 may implement a remedial action, such as converting the second portion 1006 of the second electronic currency (or any other amounts of the second electronic currency) into one or more other electronic currencies, and the like

Hence, in these examples, the method 300 may further comprise the controller 202 and/or the intermediation engine 102: monitoring a plurality of electronic currencies; and notifying the computing device 106 of changes in one or more the plurality of currencies that affects exchange rates therebetween.

Alternatively, and/or in addition, such features may be implemented by another engine of the system 100, such as a notify engine. Such an engine may have the same configuration as the intermediation engine 102 described with respect to FIG. 3.

Alternatively, and/or in addition, the present specification may provide a method (e.g., independent of the method 300), comprising: monitoring, via an engine, a plurality of electronic currencies; and notifying, via the engine, a computing device of changes in one or more the plurality of currencies that affects exchange rates therebetween.

Some examples of conditions and remedial actions are now described.

For example, one more of the exchange rates 1202 and the alerts 1204 may indicate a given change in an exchange rate of the second electronic currency as received from one currency information source 140, but not another currency information source 140, and determine that the second electronic currency may be about to collapse. In these examples, the computing device 106 may convert at least a fraction of the first portion 1004 of the second electronic currency (or any other amounts of the second electronic currency) into one or more other electronic currencies that is more stable. The intermediation engine 102 may implement a similar remedial action with respect to the second portion 1006 of the second electronic currency.

Similarly, one more of the exchange rates 1202 and the alerts 1204 may indicate a divergence in exchange rates of the second electronic currency information sources 140, but not another currency information source, and determine that the second electronic currency may be about to collapse. In these examples, the computing device 106 may convert at least a fraction of the first portion 1004 of the second electronic currency into an electronic currency (or any other amounts of the second electronic currency) into one or more other electronic currencies that is more stable. The intermediation engine 102 may implement a similar remedial action with respect to the second portion 1006 of the second electronic currency.

As should by now be apparent, the operations and functions of the devices described herein are sufficiently complex as to require their implementation on a computer system, and cannot be performed, as a practical matter, in the human mind. In particular, computing devices, and the like, such as set forth herein are understood as requiring and providing speed and accuracy and complexity management that are not obtainable by human mental steps, in addition to the inherently digital nature of such operations (e.g., a human mind cannot interface directly with a virtual platform, implement exchanges of data records, clear a memory, amongst other features and functions set forth herein).

In this specification, elements may be described as "configured to" perform one or more functions or "configured for" such functions. In, general, an element that is configured to perform or configured for performing a function is enabled to perform the function, or is suitable for performing the function, or is adapted to perform the function, or is operable to perform the function, or is otherwise capable of performing the function.

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations, which may comprise the features that the computing device and/or the processor and/or the controller, and the like, are configured to implement. Hence, the term "configured to" is understood not to be unduly limiting to means plus function interpretations, and the like.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

Unless the context of usage unambiguously indicates otherwise, articles "a," "an," and "the" should not be interpreted as meaning "one" or "only one." Rather such articles should be interpreted as meaning "at least one" or "one or more." Similarly, when the terms "the" or "said" are used to refer to a noun previously introduced by the indefinite article "a" or "an," "the" and "said" mean "at least one" or "one or more" unless the usage unambiguously indicates otherwise.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", in yet further examples "within 0.5%", and in yet further examples "within 0.1%".

Persons skilled in the art will appreciate that in some examples, the functionality of devices and/or methods and/or processes described herein may be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein may be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program may be stored as a computer program product comprising a computer usable medium. Further, a persistent storage device may comprise the computer readable program code. It is yet further appreciated that the computer-readable program code and/or computer usable medium may comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium may be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method for interaction with a virtual platform, the method comprising:
determining, via an intermediation engine, that an exchange has occurred within the virtual platform, the exchange being of a first data record for a first amount of a first electronic currency associated with the virtual platform, the first data record associated with a computing device external to the virtual platform, the exchange associated with a first account profile associated with the computing device;
exchanging, via the intermediation engine, within the virtual platform, the first amount of the first electronic currency, for a second data record associated with the virtual platform;
maintaining, via the intermediation engine, at a first memory, an indication of the second data record;
exchanging via the intermediation engine, the indication of the second data record for a second amount of a second electronic currency used external to the virtual platform, the second amount received external to the virtual platform;
transferring, via the intermediation engine, within the virtual platform, the second data record to a second account profile;
transferring, via the intermediation engine, external to the virtual platform, at least a portion of the second amount to a second memory associated with the computing device; and
in response to the transferring of the second data record to the second account profile, clearing, via the intermediation engine, the first memory of the indication of the second data record.

2. The method of claim 1, further comprising:
determining the second amount of the second electronic currency from the first amount of the first electronic currency based on an exchange rate between the second electronic currency and the first electronic currency.

3. The method of claim 2, further comprising:
determining the exchange rate via a currency engine external to the intermediation engine and the virtual platform.

4. The method of any one of claim 1 to claim 3, further comprising:
exchanging the second data record for the second amount of the second electronic currency after a given time period; and
determining the given time period by estimating changes in an exchange rate between the second electronic currency and the first electronic currency.

5. The method of claim 4, further comprising:
determining one or more of the given time period and the estimated changes in the exchange rate using one or more machine learning algorithms.

6. The method of any one of claim 1 to claim 5, further comprising:
exchanging the second data record for the second amount of the second electronic currency based on a rule set associated with the computing device.

7. The method of any one of claim 1 to claim 6, further comprising:
exchanging the second data record for the second amount of the second electronic currency after a given time period; and
determining the given time period by estimating a demand for the second data record as a function of time.

8. The method of any one of claim 1 to claim 7, further comprising:
monitoring a plurality of electronic currencies; and
notifying the computing device of changes in one or more the plurality of currencies that affects exchange rates therebetween.

9. An intermediation engine for interaction with a virtual platform, the intermediation engine comprising:
a controller; and
a computer-readable storage medium having stored thereon program instructions that, when executed by the controller, causes the controller to perform a set of operations comprising the method of any one of claim 1 to claim 8.

10. A non-transitory computer-readable storage medium having stored thereon program instructions that, when executed by a computing device, causes the computing device to the method of any one of claim 1 to claim 8.
